Europäisches Patentamt

European Patent Office

Office européen des brevets

(19)

(11) Numéro de publication: **0 017 517**
**B1**

(12) **FASCICULE DE BREVET EUROPEEN**

(45) Date de publication du fascicule du brevet: **18.08.82**

(21) Numéro de dépôt: **80400290.5**

(22) Date de dépôt: **03.03.80**

(51) Int. Cl.³: **F 28 C 1/14,** F 28 C 1/16, F 28 F 25/12

(54) Dispositif à chenaux pour le mélange des flux secs et humides de réfrigérant atmosphérique mixte à flux d'air parallèles.

(30) Priorité: **29.03.79 FR 7907861**

(43) Date de publication de la demande: **15.10.80 Bulletin 80/21**

(45) Mention de la délivrance du brevet: **18.08.82 Bulletin 82/33**

(84) Etats contractants désignés: **AT BE CH DE GB IT LU NL SE**

(56) Documents cités:
FR - A - 2 234 540
US - A - 2 016 086
US - A - 2 859 831

(73) Titulaire: **HAMON-SOBELCO S.A. Société dite: 50-58, Rue Capouillet B-1060 Bruxelles (BE)**

(72) Inventeur: **Carbonaro, Mario Giuseppe Benedetto 124 Rue Berkendael B-1060 Bruxelles (BE)**

(74) Mandataire: **Bressand, Georges et al, c/o CABINET LAVOIX 2 Place d'Estienne d'Orves F-75441 Paris Cedex 09 (FR)**

Courier Press, Leamington Spa, England.

Dispositif à chenaux pour le mélange des flux secs et humides de réfrigérant atmosphérique
mixte à flux d'air parallèles

La présente invention concerne les installations de mise en contact d'un liquide avec un gaz et plus particulièrement les réfrigérants atmosphériques ou tours de réfrigération mixtes, dans lesquels un liquide à refroidir, par exemple de l'eau, est mis en contact dans un corps d'échange directement et dans un autre corps d'échange indirectement, avec un gaz de refroidissement, par exemple de l'air atmosphérique.

Ces réfrigérants mixtes comprennant généralement une ou plusieurs ouvertures constituant une première entrée d'air et un corps d'échange thermique humide dans lequel l'air provenant de la première entrée est mis directement en contact avec le liquide à refroidir. Associé à l'échangeur humide, la tour comporte un corps d'échange thermique dit sec dont les éléments échangeurs sont disposés verticalement ou non à la périphérie de la tour dans une ou plusieurs ouvertures constituant une deuxième entrée d'air en parallèle avec la première et dans lequel l'air n'est pas directement en contact avec le liquide, ce dernier circulant dans les éléments échangeurs, par exemple des tubes à ailettes ou des tubes lisses en matière métallique ou en matière synthétique. Ces réfrigérants peuvent être à tirage naturel ou à tirage forcé, induit par des ventilateurs aspirants ou soufflants.

Les réfrigérants mixtes visent à éviter la formation de nuages à la sortie de l'installation comme cela se produit généralement à la sortie des réfrigérants humides ordinaires. Or, il s'avère que ce résultat n'est atteint que de façon partielle et qu'il subsiste souvent des filets nuageux résultant du mélange insuffisant de l'air chaud et humide issu de l'échangeur humide, et s'écoulant au centre de la tour, avec l'air chaud et sec issu de l'échangeur sec, et s'écoulant à la périphérie de la tour.

Il est déjà connu, pour tenter de résoudre ce problème du mélange des deux flux d'air de disposer à l'intérieur de la tour de réfrigération des surfaces de déflexion qui provoquent une turbulence du courant d'air sec et le dévient vers le centre de la tour.

Dans certains agencements, ces surfaces de déflexion sont constituées par des aubes directrices recourbées en languettes et s'engageant dans le courant d'air humide qui ont pour fonction d'imprimer un mouvement giratoire à l'air sec et de diriger en même temps, une fraction de l'air dans l'axe de la tour de réfrigération tel que décrit par exemple dans le US—A—3 846 519.

Il est également connu du FR—A—2 234 450 de prévoir des déflecteurs de flux d'air à l'intérieur d'un réfrigérant mixte, ces déflecteurs s'étendant à partir de la région du lieu d'arrivée du flux d'air humide au niveau du corps d'échange sec qui est le plus proche de ce dernier, vers le centre de la sortie du réfrigérant. Ces déflecteurs se présentent sous forme de conduits tronconiques constituant, selon ce document, des moyens mélangeurs. Cependant, il est remarqué que ces conduits ne font que guider "bien gentiment" les flux d'air et réduisent ainsi le turbulence de l'air génératrice de mélange. L'effet de mélange est ainsi inexistent car les deux flux s'écoulent simplement côte à côte. Il y a tout au plus un léger mélange à la frontière entre les flux secs et humides, essentiellement par diffusion. Dans le document FR—A—2 275 744 au nom de la Demanderesse, on a décrit une installation d'échange thermique entre un liquide et un gaz du type comprenant une tour à la base de laquelle le flux de gaz qui pénètre dans l'installation traverse au moins un dispositif d'échange thermique, iadite installation comportant au moins un déflecteur disposé dans la tour au-dessus du dispositif déchange thermique et adapté pour dévier au moins une partie du flux de gaz vers la périphérie de la tour.

L'invention vise à adapter la technique précitée à un dispositif pour le mélange des flux d'air secs et humides de réfrigérants atmosphériques mixtes à flux d'air parallèles.

Elle a pour objet un dispositif pour le mélange des flux secs et humides de réfrigérant atmosphérique mixte à flux d'air parallèle comportant un corps d'échange thermique humide et un corps d'échange thermique sec, disposés en parallèle dans le flux d'air, le dispositif pour le mélange des flux secs et humides comprenant des surfaces de déflexion des flux d'air sec disposées en aval des corps d'échange thermique et étant caractérisé en ce que lesdites surfaces de déflexion sont constituées par au moins un chenal ouvert en direction de la sortie d'air du réfrigérant et qui s'étend dans l'espace situé en aval du ou des corps d'échange thermique humide et en aval du ou des corps d'échange thermique sec, ledit chenal étant dirigé à partir de la région du lieu d'arrivée du flux d'air humide au niveau du ou des corps d'échange sec qui est la plus proche de ce ou ces derniers, vers le centre de la sortie du réfrigérant.

D'autres caractéristiques de l'invention apparaîtront au cours de la description qui va suivre, faite en référence aux dessins annexés, donnée uniquement à titre d'exemple, et sur lesquels:

— la Fig. 1 est une vue en élévation et en coupe d'une cellule de réfrigération à ventilateur aspirant à laquelle est appliquée l'invention;

— la Fig. 2 est une coupe de profil de la cellule représentée à la Fig. 1;

— la Fig. 3 est une coupe suivant la ligne 3—3 de la Fig. 1;

— la Fig. 4 est une vue en élévation et en coupe d'une cellule de réfrigération analogue à celle des Fig. 1 à 3, 1 mais comportant deux chenaux de section uniforme;

— la Fig. 5 est une coupe latérale de la cellule 4; et

— la Fig. 6 est une coupe suivant la ligne 6—6 de la Fig. 4.

— la Fig. 7 est une coupe en plan d'un autre mode de réalisation d'une cellule de réfrigération à laquelle est appliquée l'invention;

— la Fig. 8 est une vue de profil en coupe de la cellule de la Fig. 7.

— la Fig. 9 est une coupe en élévation d'un réfrigérant à courants croisés auquel est appliquée l'invention.

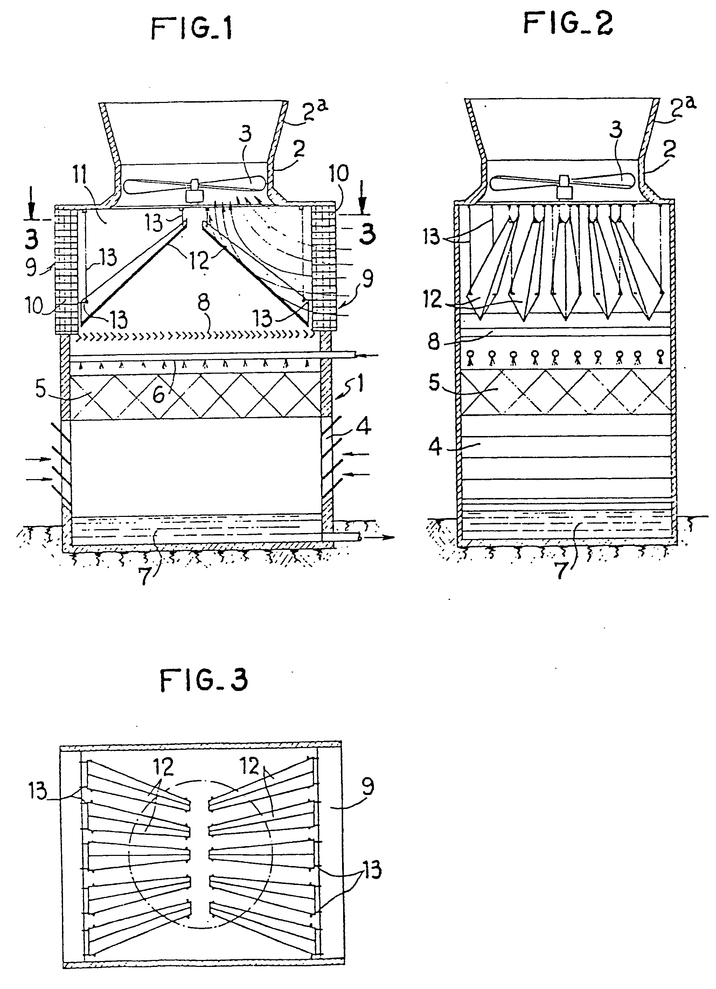

Sur la Fig. 1, l'invention est considérée comme étant appliquée à une cellule de réfrigération à ventilateur aspirant.

L'installation de la Fig. 1 comporte une tour 1 terminée à sa partie supérieure par une virole 2 et un diffuseur 2a. Dans l'orifice circulaire de la virole est monté un ventilateur aspirant 3.

La tour 1 comporte à sa base des ouvertures périphériques inférieures 4 constituant une entrée d'air pour un corps d'échange thermique humide 5. Ce corps d'échange thermique humide est du type dans lequel l'air atmosphérique entrant dans les ouvertures 4 est directement en contact avec de l'eau provenant d'un réseau de distribution 6. Ce corps d'échange thermique humide ou de mise en contact 5, qui s'étend sur toute ou à peu près toute la section interne de la tour est dit à "contre-courant", c'est-à-dire que le flux d'air s'y déplace dans une direction ascendante opposée à celle de l'eau.

L'eau de ruissellement déversée par le réseau de distribution 6 est recueillie dans un bassin 7.

Au-dessus du réseau de distribution 6 est disposé un séparateur de gouttes 8 constitué par exemple de panneaux de feuilles ondulées parallèles dont les arêtes de ondulations sont horizontales et qui définissent entre elles un trajet sinueux selon lequel le flux d'air ascendant est débarrassé d'une partie des gouttelettes qu'il contient en suspension après sa mise en contact avec l'eau.

Au-dessus du corps d'échange thermique humide 5, la tour comporte des ouvertures périphériques supérieures 9 constituant des entrées d'air pour un corps d'échange thermique sec 10. La partie de la tour 1 pourvue des ouvertures 9 constitue en fait une chambre de mélange 11 des flux d'air humides et secs provenant respectivement du corps d'échange thermique humide 5 et du corps d'échange thermique sec 10. Dans la chambre 11 sont disposés des chenaux 12 dirigés vers le haut à partir de la périphérie de la chambre et vers le centre de celle-ci.

Dans le mode de réalisation des Fig. 1 à 3, les chenaux 12 présentent un profil en V d'angle constant, à fond pointu, dont la hauteur des branches décroît à partir de la périphérie du réfrigérant vers l'intérieur de celui-ci.

La réfrigérant décrit en référence aux Fig. 1 à 3 présente une section rectangulaire, de sorte que les chenaux 12 sont disposés de manière à converger sous l'orifice circulaire de la virole 2 du ventilateur aspirant 3 (Fig. 3). Avec des chenaux convergents comme ceux du présent mode de réalisation de réfrigérant suivant l'invention, il a lieu d'éviter d'engorger le centre du réfrigérant par une trop forte densité de chenaux. Ceci est obtenu dans le présent exemple par le fait même que les chenaux 12 sont de section décroissant vers le centre du réfrigérant.

En revanche lorsque lesdits chenaux sont de section constante, il faut éventuellement prévoir parmi les chenaux aboutissant dans la région centrale du réfrigérant, certains chenaux de longueur plus faible, à raison par exemple de 1 sur 2, les extrémités périphériques de tous les chenaux étant alignées le long de cette périphérie.

Lorsque le réfrigérant est de section circulaire, les chenaux sont alors disposés de préférence radialement.

Dans le présent mode de réalisation, les chenaux 12 sont maintenus en place par des haubans 13.

La matière constituant les chenaux est de préférence légère, et résistante à la corrosion dûe à l'air chaud et humide. L'amiante-ciment, l'aluminium, l'acier galvanisé, le bois ou un polymère organique synthétique conviennent parfaitement à la réalisation de tels chenaux.

Le fond des chenaux n'a pas lieu d'être étanche à l'air. Dans le cas de chenaux à profil en V, ceux-ci peuvent être constitués de plaques planes, un jour pouvant subsister entre celles-ci. Ce jour permet, d'une part, l'écoulement de l'eau qui pourrait se condenser ou tomber dans le chenal et, d'autre part, la pénétration d'air humide provenant de l'échangeur thermique humide, ce qui améliore le mélange, à condition qu'elle se fasse en quantité limitée pour ne pas entraver la circulation du flux d'air sec.

Dans le mode de réalisation qui vient d'être décrit, les chenaux sont rectilignes et présentent une section en V décroissante.

On peut cependant envisager des profils de chenaux en U à fond arrondi ou de forme similaire. Par ailleurs, les chenaux peuvent être également courbes, auquel cas, leurs extrémités situées en regard des ouvertures d'entrée 9 seraient horizontales ou présenteraient une pente relativement faible, alors que leurs extrémités débouchant dans la partie centrale du réfrigérant présenteraient une inclinaison voisine de la verticale.

Par ailleurs, chaque chenal peut présenter une section constante sur toute la longueur, ce qui le rend particulièrement aisé et économique à réaliser.

Le dispositif qui vient d'être décrit fonctionne de la façon suivante.

Les chenaux 12 dirigés vers le haut à partir de la périphérie de la chambre 11 vers le centre de celle-ci constituent un obstacle pour le mouvement ascendant de l'air issu du corps d'échange thermique humide 5, obstacle qui crée un couloir de passage pour l'air issu du dispositif d'échange thermique sec 10.

En effet, l'air qui sort du corps d'échange thermique sec à l'endroit d'un chenal 12 progresse le long de celui-ci sans être perturbé par l'air issu du corps d'échange thermique humide 5, alors qu'en l'absence de tels chenaux, il serait refoulé par l'air humide à la périphérie du réfrigérant.

A mesure que la section des chenaux 12 diminue en s'éloignant du corps d'échange thermique sec, il y a une diminution du débit d'air sec véhiculé par chacun de ces chenaux. Cette diminution du débit d'air sec de chaque chenal 12 correspond à un dégagement d'air sec tout au long du chenal, vers la bouche de sortie du réfrigérant, ce qui contribue efficacement au bon mélange des flux secs et humides.

Les pertes de charge dûes aux chenaux 12 sont très faibles, car, d'une part, le fond des chenaux est judicieùsement profilé pour que le flux humide y soit dévié sans création de tourbillons, de remous, générateurs de pertes de charges élevées et, d'autre part, la partie évasée de chaque chenal 12 ne correspond pas à un élargissement brusque de la section disponible pour le flux d'air humide, ce qui engendrerait de fortes pertes de charges, mais est une source de flux d'air sec quittant le chenal suivant une trajectoire pratiquement parallèle au flux d'air humide.

En aval des arêtes longitudinales des chenaux 12, il existe une zone légèrement tourbillonnaire favorable au mélange des deux flux d'air sec et humide.

Vis-à-vis du flux d'air humide, les chenaux 12 produisent un effet d'ombre qui fait que le flux d'air sec s'engageant au-dessus des chenaux est influencé par ceux-ci pratiquement sur toute la hauteur au-dessus d'eux, ce qui favorise le mélange en mettant en jeu une fraction très importante du débit d'air.

Par conséquent, l'air sec étant guidé dans son mouvement vers le centre, le flux d'air humide est moins refoulé vers le centre et est davantage dirigé vers la périphérie aux endroits dépourvus de chenaux 12.

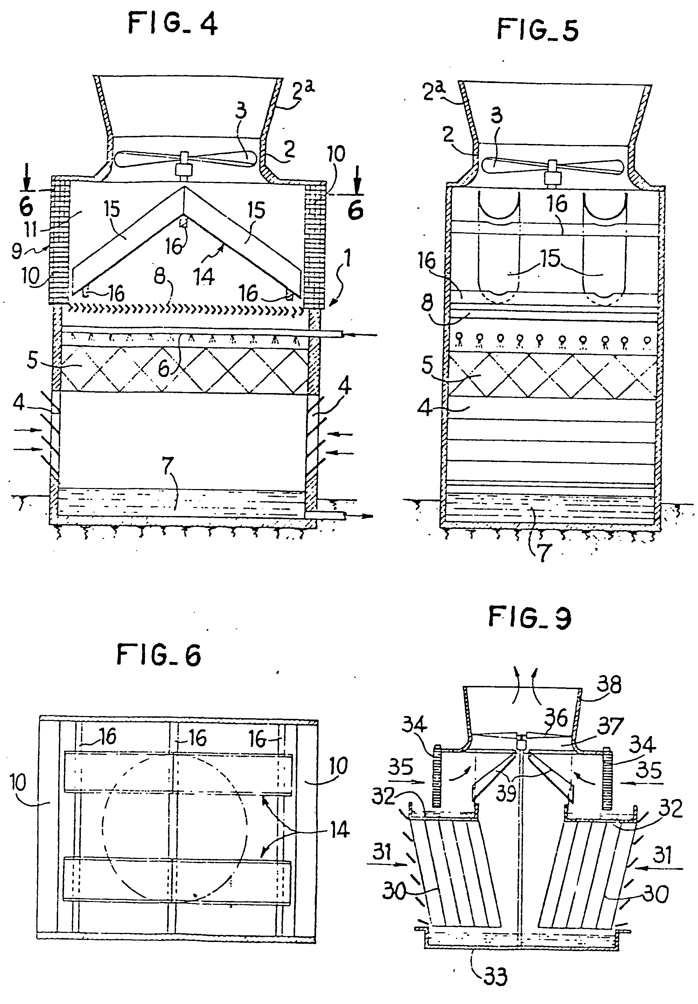

Le réfrigérant représenté aux Fig. 4 à 6, diffère de celui des Fig. 1 à 3, en ce que le dispositif pour le mélange des flux d'air secs et humides est constitué par deux chenaux 14 en chevrons, formés chacun de deux branches ascendantes 15 se rejoignant dans la partie centrale de la chambre 11 située au-dessus du dispositif d'échange thermique humide 5. Les chenaux 14 joignent les deux entrées d'air 9 du dispositif d'échange thermique sec 10 sous l'orifice d'aspiration du ventilateur 3.

Dans le présent exemple, les chenaux 14 présentent une section uniforme, leurs deux branches 15 se rejoignant à une distance suffisante au-dessous de l'orifice d'aspiration du ventilateur 3 pour, d'une part, ne pas perturber le fonctionnement du ventilateur et, d'autre part, donner un accès suffisant à l'air humide.

Ainsi qu'on peut le voir à la Fig. 5, le chenal 14 présente une section semi-circulaire et il est soutenu par des barres 16.

Le fonctionnement du dispositif représenté aux Fig. 4 à 6 est semblable à celui du dispositif des Fig. 1 à 3.

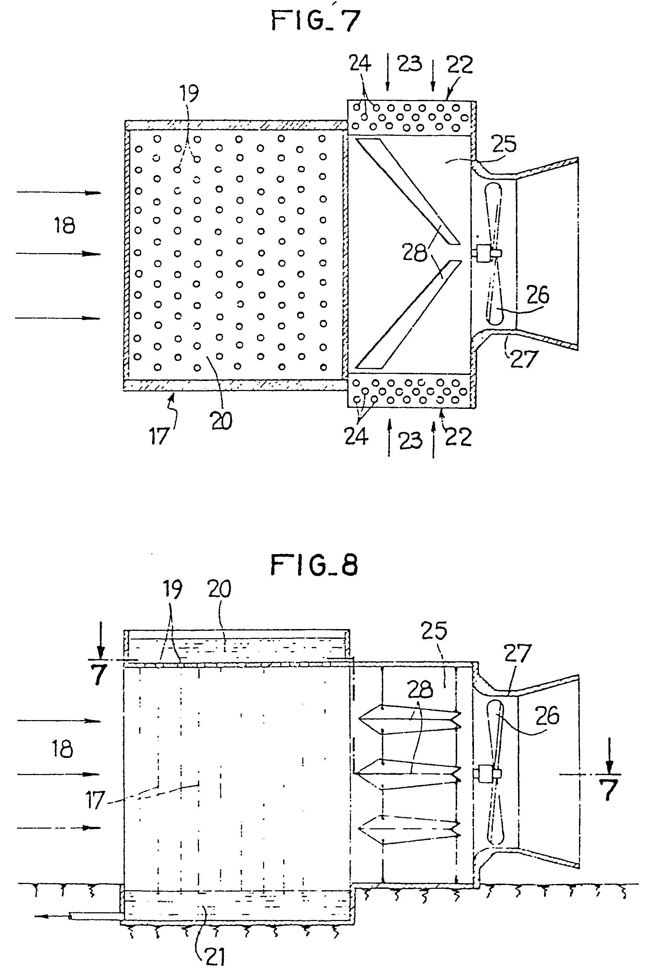

Le réfrigérant représenté aux Fig. 7 et 8 est un réfrigérant à circulation d'air horizontale.

Il comprend un échangeur thermique humide 17 à courants croisés comportant une entrée d'air 18 et un réseau de distribution d'eau constitué par des ajutages disperseurs 19 alimentés par exemple par un réservoir 20 à ciel ouvert. L'eau de ruissellement est recueillie dans un bassin 21.

A la sortie du corps d'échange thermique humide 17 est placé un corps d'échange thermique sec 22 comportant des entrées d'air 23 disposées perpendiculairement à l'entrée d'air 18 du corps d'échange thermique humide 17, constitué par exemple par deux échangeurs thermiques formés chacun d'une batterie de tubes lisses verticaux 24 en matière plastique.

Le corps d'échange thermique sec 22 définit avec le corps d'échange thermique humide 17, la chambre 25 de mélange des flux d'air secs et humides.

Le réfrigérant comporte en outre un ventilateur 26 d'aspiration du mélange hors de la chambre 25, ledit ventilateur étant monté dans une virole 27 qui définit l'orifice d'aspiration de celui-ci.

Dans la chambre de mélange 25 sont disposés des chenaux 28 placés horizontalement et convergeant vers l'axe de symétrie du réfrigérant en direction du ventilateur 26.

Ainsi qu'on peut le voir en référence à la Fig. 8, les chenaux 28 sont disposés dans la chambre de mélange 25 de façon que leurs ouvertures soient dirigées vers l'orifice d'aspiration du réfrigérant.

On voit en outre sur cette Fig. que les chenaux 28 sont placés par groupes de chenaux parallèles superposés.

Dans le présent mode de réalisation les chenaux 28 sont rèctilignes à section décroissante.

On comprendra que toutes les variantes de forme envisagées pour les chenaux des réfrigérants décrits en référence aux Fig. 1 à 6 peuvent également être adaptées pour le réfrigérant des Fig. 7 et 8.

Si l'on utilise des chenaux incurvés, les extrémités de ceux-ci voisines des entrées d'air 23 du corps d'échange thermique sec 22 doivent être parallèles à la direction de l'air issu de ce corps, ou légèrement inclinées par rapport à celle-ci, tandis que leurs extrémités opposées doivent être parallèles à la direction générale de sortie de l'air hors du réfrigérant ou légèrement inclinées par rapport à cette direction.

Le réfrigérant représenté a la Fig. 9 comporte des corps d'échange thermique humide à courants croisés 30 comportant des entrées d'air 31, des réservoirs 32 destinés à délivrer l'eau de ruissellement aux corps d'échange thermique et un bassin 33 destiné à recevoir l'eau après ruissellement.

Au-dessus des réservoirs 3 pour l'eau de ruissellement sont disposés des corps d'échange thermique sec 34 comportant des entrées d'air 35, un ventilateur d'aspiration 36 étant placé dans une virole 37 surmontée d'un diffuseur 38 au-dessus des corps d'échange sec 34.

Dans l'espace délimité par les corps d'échange thermique humide 30 et les corps d'échange thermique sec 34, sont disposés des chenaux 39 de déflexion des flux d'air sec maintenus en place par des haubans.

Contrairement aux cellules représentées aux Fig. 1 à 6, dans lesquelles les extrémités périphériques des chenaux sont disposées à proximité immédiate des corps d'échange thermique sec, les chenaux 39 ont leurs extrémités périphériques placées immédiatement au-dessus des bords intérieurs des réservoirs 32 d'eau de ruissellement des corps d'échange thermique humide.

## Revendications

1. Dispositif pour le mélange des flux secs et humides de réfrigérant atmosphérique mixte à flux d'air parallèles comportant au moins un corps d'échange thermique humide (5, 17, 30) et au moins un corps d'échange thermique sec (10, 22, 34), disposés en parallèle dans le flux d'air, le dispositif pour le mélange des flux secs et humides comprenant des surfaces de déflexion des flux d'air sec disposées en aval des corps d'échange thermique, ce dispositif étant caractérisé en ce que lesdites surfaces de déflexion sont constituées par au moins un chenal (12, 14, 18) ouvert en direction de la sortie d'air du réfrigérant et qui s'étend dans l'espace (11, 15) situé en aval du ou des corps d'échange thermique humide (5, 17, 30) et en aval du ou des corps d'échange thermique sec (10, 22, 34), ledit chenal étant dirigé à partir de la région du lieu d'arrivée du flux d'air humide au niveau du ou des corps d'échange sec qui est la plus proche de ce ou ces derniers, vers le centre de la sortie du réfrigérant.

2. Dispositif suivant la revendication 1, caractérisé en ce que le ou les chenaux (14) présentent une section constante sur toute leur longueur.

3. Dispositif suivant la revendication 1, caractérisé en ce que le ou les chenaux (12; 28) présentent une section décroissante à partir de leur extrémité voisine du dispositif d'échange thermique sec jusqu'à leur extrémité voisine de la zone centrale du réfrigérant.

4. Dispositif suivant l'une quelconque des revendications 1 à 3, caractérisé en ce que le ou les chenaux présentent une section en V ou en U.

5. Dispositif suivant la revendication 4, dont les chenaux ont une section en V, caractérisé en ce que lesdits chenaux (12) sont constituées de plaques planes, entre lesquelles subsiste un jour permettant l'écoulement de l'eau de condensation et le passage d'air humide provenant du dispositif d'échange thermique humide.

6. Dispositif suivant l'une quelconque des revendications 2 à 5, caractérisé en ce que ledit réfrigérant ayant une section circulaire, lesdits chenaux sont disposés radialement dans ledit espace situé en aval des dispositifs d'échange thermique.

7. Dispositif suivant l'une quelconque des revendications 2 à 5, caractérisé en ce que ledit réfrigérant étant de section rectangulaire, lesdits chenaux sont disposés soit parallèlement entre eux, soit de façon à converger dans la zone centrale du réfrigérant.

8. Dispositif suivant l'une quelconque des revendications 2 à 7, caractérisé en ce que certains desdits chenaux de section constante sont de longueur réduite, les extrémités de tous le chenaux qui sont en regard du corps d'échange thermique sec étant alignées à l'aval de ce corps.

9. Dispositif suivant l'une quelconque des revendications 1 à 8, caractérisé en ce que lesdits chenaux sont rectilignes ou incurvés.

10. Dispositif suivant l'une quelconque des revendications précédentes, caractérisé en ce que ledit réfrigérant comportant un corps d'échange thermique humide à contre-courant, les extrémités périphériques desdits chenaux (12, 15, 28) sont placées à proximité immédiate des corps d'échange thermique sec (10, 22).

11. Dispositif suivant l'une quelconque des revendications précédentes, caractérisé en ce que ledit réfrigérant comportant des corps d'échange thermique humides à courants croisés, les extrémités périphériques desdits chenaux (39) sont placées à proximité des bords intérieurs desdits corps d'échange thermique humides (30).

## Claims

1. A device for mixing dry and humid streams of a combined atmospheric cooler employing parallel air streams, comprising at least a wet heat exchange unit (5, 17, 30) and at least a dry heat exchange unit (10, 22, 34), disposed in parallel in the air stream, the device for mixing the dry and humid streams comprising surfaces for deflecting the dry air streams and disposed downstream of the heat exchange units, said device being characterized in that said deflecting surfaces are formed by at least one channel (12, 14, 18) which is open in the direction of the air outlet of the cooler and extends in the space (11, 15) located downstream of the wet heat exchange unit(s) (5, 17, 30) and downstream of the dry heat exchange unit(s) (10, 22, 34), said channel extending from a part of the region in which the humid air stream arrives adjacent the dry exchange unit(s), which part is the nearest to said dry exchange unit(s), toward the centre of the outlet of the cooler.

2. A device as claimed in claim 1, characterized in that the channel or channels (14) have a constant section throughout their length.

3. A device as claimed in claim 1, characterized in that the channel or channels (12; 28) have a section which decreases from the end thereof in the vicinity of the dry heat exchange unit to the end thereof in the vicinity of the centre zone of the cooler.

4. A device as claimed in claim 1, 2 or 3, characterized in that the channel or channels have a V- or U-shaped section.

5. A device as claimed in claim 4, wherein the channels have a V-shaped section and characterized in that the channels (12) are formed by planar plates between which there is provided a gap which permits the flow of water of condensation and the passage of humid air coming from the wet heat exchange device.

6. A device as claimed in any one of the claims 2 to 5, characterized in that said cooler has a circular section and said channels are disposed radially in said space located downstream of the heat exchange unit.

7. A device as claimed in any one of the claims 2 to 5, characterized in that said cooler has a rectangular section and said channels are disposed either parallel to each other or in such manner as to converge in the centre region of the cooler.

8. A device as claimed in any one of the claims 2—7, characterized in that some of said channels of constant section have a reduced length, the ends of all the channels which face the dry heat exchange unit being in alignment of the downstream side of this unit.

9. A device as claimed in any one of the claims 1 to 8, characterized in that said channels are rectilinear or curvilinear.

10. A device as claimed in any one of the preceding claims, characterized in that said cooler comprises a counter-current wet heat exchange unit and the peripheral ends of said channels (12, 15, 28) are placed in the immediate vicinity of the dry heat exchange units (10, 22).

11. A device as claimed in any one of the preceding claims, characterized in that said cooler comprises cross-current wet heat exchange units and the peripheral ends of said channels (39) are placed in the vicinity of the inner edges of said wet heat exchange units (30).

## Patentansprüche

1. Anordnung für das Mischen von trockenen und feuchten Strömungen eines atmos- phärischen Mischkühlers mit Parallel-luft- strömung, der mindestens einen Feucht- Wärmetauschkörper (5, 17, 30) und mindestens einen Trocken-Wärmetauschkörper (10, 22, 34) umfaßt, die parallel in der Luftströmung angeordnet sind, wobei die Anordnung für das Mischen der trockenen und feuchten Strömungen Ablenkoberflächen für die Trockenluftströmung umfassen, die stromabwärts der Wärmetauschkörper angeordnet sind, welche Anordnung dadurch gekennzeichnet ist, daß die genannten Ablenkoberflächen von mindestens einer Rinne (12, 14, 18) gebildet sind, die in Richtung des Kühlluftauslasses offen ist und die sich in den Raum (11, 15) erstreckt. der stromabwärts des oder der Feucht-Wärmetauschkörper (5, 17, 30) sowie stromabwärts des oder der Trocken- Wärmetauschkörper (10, 22, 34) liegt, wobei die Rinne, ausgehend vom Bereich des Ortes des Feuchtlufteintritts auf dem Niveau des oder der Trocken-wärmetauschkörper, der dem oder den letzteren nächstgelegen ist, in Richtung des Zentrums des Kühlerauslasses gerichtet ist.

2. Anordnung nach Anspruch 1, dadurch gekennzeichnet, daß die Rinne oder Rinnen (14) einen auf ihrer gesamten Länge konstanten Querschnitt aufweisen.

3. Anordnung nach Anspruch 1, dadurch gekennzeichnet, daß die Rinne oder Rinnen (12, 28) einen abnehmenden Querschnitt, ausgehend von ihrem Ende nahe dem Trocken- Wärmetauschkörper, bis zu ihrem Ende nahe der Zentralzone des Kühlers aufweisen.

4. Anordnung nach einem der Ansprüche 1 bis 3, dadurch gekennzeichnet, daß die Rinne oder Rinnen einen V- oder U-förmigen Querschnitt aufweisen.

5. Anordnung nach Anspruch 4, bei der die Rinnen einen V-förmigen Querschnitt besitzen, dadurch gekennzeichnet, daß die Rinnen (12) aus ebenen Platten gebildet sind, zwischen denen eine Öffnung verbleibt, welche den Abfluß von Kondensationswasser und den Durchtritt von aus dem Feucht-Wärmetauschkörper kommender Feuchtluft ermöglicht.

6. Anordnung nach einem der Ansprüche 2 bis 5, dadurch gekennzeichnet, daß der Kühler einen runden Querschnitt aufweist, wobei die Rinnen radial in dem Raum stromabwärts der Wärmetauschkörper angeordnet sind.

7. Anordnung nach einem der Ansprüche 2 bis 5, dadurch gekennzeichnet, daß der Kühler einen rechteckigen Querschnitt aufweist, wobei die Rinnen entweder parallel zueinander oder derart angeordnet sind, daß sie in die Zentralzone des Kühlers konvergieren.

8. Anordnung nach einem der Ansprüche 2 bis 7, dadurch gekennzeichnet, daß bestimmte Rinnen konstanten Querschnitts eine verringerte Länge aufweisen, wobei die Enden aller Rinnen, welche dem Trocken-Wärmetauschkörper gegenüberliegen, stromabwärts dieses Körpers ausgefluchtet sind.

9. Anordnung nach einem der Ansprüche 1 bis 8, dadurch gekennzeichnet, daß die Rinnen gerade oder gekrümmt sind.

10. Anordnung nach einem der vorangehenden Ansprüche, dadurch gekennzeichnet, daß der Kühler einen Gegenstrom-Feuchtwärmetauschkörper aufweist, wobei die peripheren Enden der Rinnen (12, 15, 28) in unmittelbarer Nähe des Trocken-Wärmetauschkörpers (10, 22) plaziert sind.

11. Anordnung nach einem der vorangehenden Ansprüche, dadurch gekennzeichnet, daß der Kühler Kreuzstrom-Feuchtwärmetauschkörper aufweist, wobei die peripheren Enden der Rinnen (39) nahe den Innenkanten der Feucht-Wärmetauschkörper (30) plaziert sind.

FIG_1

FIG_2

FIG_3

0017517

FIG_4

FIG_5

FIG_6

FIG_9

2

FIG_7

FIG_8